# EUROPÄISCHE PATENTANMELDUNG

(11) **EP 2 617 564 A1**
(43) Veröffentlichungstag der Anmeldung: **24.07.2013**
(21) Anmeldenummer: 12151621.5
(22) Anmeldetag: 18.01.2012
(51) Int. Cl.: B32B 5/18, B32B 15/04, B32B 15/18, B32B 27/40, E04B 1/76, E04B 1/94, E04C 2/08, E04C 2/10, E04C 2/20, E04F 13/08, E04F 13/12, E06B 5/16

(54) **Brandschutzpaneel**

(71) Anmelder: Zlato Runo d. o. o., 1234 Menges (SI)
(72) Erfinder: Dück, Wilhelm, 23560 Lübeck (DE)
(74) Vertreter: Patentanwälte Vollmann & Hemmer

(57) **Zusammenfassung**

Das Brandschutzpaneel (1) ist zum Aufbau einer Brandschutzwand bestimmt, die dadurch gebildet wird, dass mehrerer solcher Brandschutzpaneele (1) nebeneinander angeordnet werden. Jedes Brandschutzpaneel (1) weist zwei metallische Blechschichten (4) und eine dazwischen befindliche PIR- oder PUR-Schaumschicht (6) auf, wobei zwischen der PIR- oder PUR-Schaumschicht (6) und dem Blech (4) mindestens eine Zwischenschicht (5) z. B. aus einem aus Kohlefasern gebildeten Vlies (5) angeordnet ist.

## Beschreibung

Die Erfindung betrifft ein Brandschutzpaneel für eine Brandschutzwand.

Brandschutzwände, auch Brandwände genannte, sind elementarer Bestandteil des Brandschutzes und dazu bestimmt, ein Übergreifen eines Feuers von einem Gebäudeteil zum anderen Gebäudeteil und umgekehrt zu verhindern. Mit derartigen Brandschutzwänden können Gebäude in Brandabschnitt eingeteilt werden. Hierzu zählen auch feuerwiderstandsfähige Wände, die in Klassen unterteilt sind, je nach Standzeit. Derartige Brandschutzwände zählen heutzutage zum Stand der Technik und werden typischerweise bei Bauwerken, die nahe der Grundstücksgrenze enden, vorgesehen oder aber in größeren Gebäuden, bei denen der Abbrand des Gesamtgebäudes nicht hingenommen werden kann. Sie bestehen meist aus einem nicht brennbaren Material, typischerweise einer nicht brennbaren Stein- oder sonstigen Mineralwolle, die in ein damit geschütztes Ständerwerk eingegliedert und mit einer nicht brennbaren Deckschicht kaschiert ist. Diese Bauart eignet sich insbesondere für nicht tragende Wände.

Nachteilig dabei ist, dass die so gebildeten Feuerschutzwände oder Brandschutzwände vergleichsweise dick und kostenintensiv in der Herstellung sind. Wenn eine solche Wand im Zusammenhang mit einer Kühlanforderung, wie beispielsweise einem Kühlhaus, eingebaut werden soll, ist es stets erforderlich, neben der Brandschutzwand eine weitere Wand vorzusehen, welche für die Isolierung des Kühlraumes vorgesehen ist.

Derartige Brandschutzwände sind den örtlichen Anforderungen individuell angepasst, d. h. vor Ort erstellt, was den Aufbau verlangsamt und verteuert.

Vor diesem Stand der Technik liegt der Erfindung die Aufgabe zugrunde, Brandschutzpaneele zu schaffen, mit denen eine Brandschutzwand modular, kostengünstig und schnell aufgebaut werden kann.

Diese Aufgabe wird gemäß der Erfindung durch ein Brandschutzpaneel gelöst, wie es in Anspruch 1 definiert ist. Das erfindungsgemäße Brandschutzpaneel, das zum Aufbau einer Brandschutzwand vorgesehen und bestimmt ist, weist zwei metallische Blechschichten und eine dazwischen befindliche PIR- oder PUR-Schaumschicht auf, wobei zwischen der Schaumschicht und dem Blech mindestens eine Zwischenschicht angeordnet ist. PUR steht für Polyurethane. PIR-Schaum ist wie PUR-Schaum ein Schaumstoff auf Isocyanat-Basis, weist aber einen erhöhten Gehalt an Isocyanurat-Strukturen auf (PIR = Polyisocyanurat). PIR-Schaumstoffe werden auch als PUR-PIR-Schaumstoffe bezeichnet, da sie Makromoleküle mit Urethan- und Isocyanurat-Strukturen enthalten. PIR-Schaumsysteme werden bei einer Isocyanatkennzahl hergestellt, die definitionsgemäß größer als 180 ist. Die Isocyanat-Kennzahl (Isocycnat-Index) ergibt sich aus dem molaren Verhältnis der IsocyanatGruppen zu den reaktiven Wasserstoffatomen (OH-Gruppen der Polyole), multipliziert mit 100.

Bei den erwähnten PUR- bzw. PIR-Schäumen handelt es sich um Mehrkomponenten-Hartschäume, die auf Basis organischer Polyole und Isocyanaten unter Verwendung von Treibmitteln (z. B. Pentan) und unter Zusatz von Hilfskomponenten, wie z. B. Aktivatoren und Schaumstabilisatoren, hergestellt werden. Polyurethan-Hartschaumstoffe (PUR-Schaum, PIR-Schaum) werden typischerweise als Wärmedämmstoffe verwendet. Die Schaumschicht des erfindungsgemäßen Brandschutzpaneels weist vorteilhaft ein Raumgewicht zwischen 36 und 54 kg/m³ auf.

Grundgedanke der Erfindung ist es, fabrikmäßig vorzufertigende Brandschutzpaneele bereitzustellen, die kostengünstig herstellbar sind und die vor Ort zum Einbau nur noch vergleichsweise geringer Anpassungen bedürfen. Dabei sind die erfindungsgemäßen Brandschutzpaneele anders als beim Stand der Technik nicht mit mineralischen Dämmschichten versehen, sondern weisen zwischen den metallischen Deckschichen eine PIR- oder PUR-Schaumschicht auf, welche jeweils mittels einer Zwischenschicht an die metallische Blechschicht angekoppelt ist.

Derartige Brandschutzpaneele können kostengünstig hergestellt werden, da sie in einem kontinuierlichen Fertigungsprozess herstellbar sind.

Die erfindungsgemäßen Brandschutzpaneele haben den Vorteil, dass sie nicht nur Brandschutz bilden, sondern auch eine hohe Isolierwirkung bei vergleichsweise kleinen Ausmaßen und Kosten aufweisen. Sie können also neben der Brandschutzfunktion auch noch weitere Funktionen übernehmen, beispielsweise die Außenwand eines Kühlhauses bilden.

Vorteilhaft ist zwischen der Schaumschicht und dem Blech eine Haftvermittlerschicht vorgesehen, welche einen innigen Verbund zwischen Schaum und Blech sicherstellt. Eine solche Haftvermittlerschicht ist für den statischen Zustand und weniger für den Brandfall wichtig. Die Haftvermittlerschicht kann beispielsweise durch einen Schmelzklebstoff gebildet sein, der im Brandfall relativ schnell verdampft und dann seine Klebwirkung aufgibt.

Vorteilhaft ist die Zwischenschicht durch eine auf die metallische Blechschicht geklebte Textilie gebildet. Textilie im Sinne der Erfindung kann ein Gewebe, ein Gewirke oder ein in sonstiger Weise gebildeter flächiger Stoff sein. Eine Textilie auf eine Blechschicht aufzukleben, ist fertigungstechnisch einfach, es kann kontinuierlich erfolgen, wodurch die Fertigungskosten im Vergleich zu einer diskontinuierlichen Fertigung deutlich gesenkt sind. Eine solche textile Schicht hat den Vorteil, dass die darunter gebildete PIR- oder PUR-Schaumschicht, sich intensiv in der textilen Schicht verankern kann, wodurch ein zuverlässiger Verbund auch mit dem Blech entsteht, was insbesondere für den Nichtbrandfall wichtig ist. Aber auch für den Brandfall ist durch die textile Zwischenschicht bei geeigneter Schichtwahl eine deutliche Standzeitverlängerung zu erreichen. Besonders vorteilhaft hat es sich erwiesen, eine aus Carbonfasern aufgebaute Textilie zu verwenden, die im Brandfalle verkohlt und damit eine hochwirksame Sperrschicht für die Wärmeausbreitung in den PIR-Schaum bildet.

Vorteilhaft einsetzbar ist hier auch eine Textilie aus Glasfasern, welche selbst bei Versagen der Blechschicht die Flammfront, zumindest eine Zeit lang, vom PIR- oder PUR-Schaum fernhält. Auch wenn die Flammfront die Blechschicht nicht durchdringt und lediglich eine hohe Wärmeeinwirkung erfolgt, erweist sich die Textilie aus Glasfaser als vorteilhaft, weil sie eine isolierende Wirkung hat und die schnelle Wärmeeinbringung in die PIR-Schaumschicht wirksam verhindert.

Alternativ kann die Textilie auch aus sonstigen synthetischen Fasern gebildet sein, beispielsweise aus den unter der Marke Trevira® bekannten Polyesterfasern aufgebaut sein.

Besonders vorteilhaft hat es sich erwiesen, wenn die Textilie mit Klebstofffasern, insbesondere Schmelzklebstofffasern durchsetzt ist. Diese schmelzen beim Herstellungsprozess und bilden so eine innige Verbindung der Fasern. Insbesondere bei der Verwendung von Carbon- oder Polyesterfasern hat es sich als besonders zweckmäßig erwiesen, die Textilie als Vlies auszubilden, vorzugsweise als ein durch Vernadeln gebildetes Vlies, also eine mechanische Verbindung der Fasern.

Um das Brandschutzpaneel modulartig einsetzen zu können, ist es vorteilhaft an zwei voneinander abgewandten seitlichen Anschlussseiten mit Eingriffsprofilen versehen, derart, dass benachbarte Brandschutzpaneele einer Brandschutzwand in Querrichtung zur Wand formschlüssig miteinander verbunden sind. Es versteht sich, dass die Eingriffsprofile zu beiden Seiten des Paneels so ausgebildet sind, dass mehrere Paneele jeweils mit ihren Eingriffsprofilen an den Anschlussseiten aneinander angliederbar sind, ohne dass es einer speziellen Halterung oder einer Verbindung bedarf. Wenn diese Eingriffsprofile so ausgebildet sind, dass ein Formschluss in Querrichtung der Wand erfolgt, wie dies beispielsweise bei Nut- Feder-Profilen der Fall ist, dann können die Brandschutzpaneele durch einfaches Aneinanderstecken miteinander verbunden werden und sind lediglich zu fixieren, wobei darüber hinaus bauseitig eine entsprechende Aufnahme im Boden- und Deckenbereich vorzusehen ist. Die erfindungsgemäßen Brandschutzpaneele können wie vorher beschrieben nebeneinander angeordnet sein, wobei dann bauseitig eine entsprechende Aufnahme im Boden- und Deckenbereich vorzusehen ist oder übereinander, wobei dann eine entsprechende Aufnahme in den Seitenbereichen vorzusehen ist. In letzterem Fall sind die Nut-Feder-Profile dann horizontal angeordnet.

Dabei ist es zweckmäßig die metallischen Blechschichten und die Zwischenschichten auch im Bereich der seitlichen Anschlussseiten anzuordnen, zumindest in den Bereichen, die von außen zugänglich sind, bzw. die beim sich Aufstellen einer Fuge, wie dies im Brandfall durch Wärmespannungen eintreten kann, zugänglich sind.

Eine Art Nut-Feder-Profil kann vorteilhaft dadurch erzielt werden, dass ein Eingriffsprofil einen U-förmigen Querschnitt aufweist, wobei die freien Schenkel des U zum benachbarten Paneel gerichtet sind und das andere Eingriffsprofil einen in das U-förmige Eingriffsprofil eingreifenden Schenkel aufweist. Dabei sind die Eingriffsprofile so aufeinander abgestimmt, dass sie möglichst spielfrei ineinander greifen.

Es versteht sich, dass ein solches Nut-Federprofil auch durch geeignete andere Formgebung erzielt werden kann. Wesentlich hierbei ist, dass eine Art Labyrinth der Trennfuge gebildet wird, welches einerseits einen Formschluss in Querrichtung zur Wand bildet und andererseits einen Flammendurchtritt sicher vermeidet.

Die metallischen Blechschichten des erfindungsgemäßen Brandschutzpaneels sind vorteilhaft durch Stahlbleche gebildet, welche vorteilhaft bis in den Bereich der seitlichen Anschlussseiten geführt sind und dort durch Falzen umgebogen sind. Eine solche Anordnung ermöglicht zum einen durchgehende Blechschichten auf beiden Seiten, die bis in die Eingriffsprofile reichen und somit eine geschlossene Oberfläche zu der einen und der anderen Seite der Wand gewährleisten, und können zum anderen fertigungstechnisch günstig hergestellt werden, da das Falzen im kontinuierlichen Verfahren erfolgen kann. Im kontinuierlichen Verfahren können somit die erfindungsgemäßen Paneele derart hergestellt werden, dass die flachen Wandseiten sowie die Anschlussseiten mit den Eingriffsprofilen geschlossen ausgebildet sind, wohingegen die Ober-und Unterseite durch Abtrennen aus dem Band gebildet werden. Insoweit sind also Einfassprofile oder entsprechende boden- oder deckenseitige Halterungen vorzusehen, was jedoch baulich unproblematisch ist.

Das erfindungsgemäße Brandschutzpaneel hat den Vorteil, dass es nicht ausschließlich dem Brandschutz dienen kann sondern wegen seiner guten Isolierwirkung auch gleichzeitig weiteren Zwecken zugeführt werden kann. So kann das erfindungsgemäße Brandschutzpaneel gleichzeitig die Wand oder Zwischenwand eines Kühlhauses bilden, auch kann dieses gezielt als zusätzlicher Wärmeschutz in die Gebäudestruktur eingebettet werden.

Die Erfindung ist nachfolgend anhand eines in der Zeichnung dargestellten Ausführungsbeispiels näher erläutert. Es zeigen
- Fig. 1: in stark vereinfachter Darstellung ein Brandschutzpaneel im Querschnitt und
- Fig. 2: in gegenüber Fig. 1 verkleinerter Querschnittsdarstellung zwei miteinander verbundene Brandschutzpaneele.

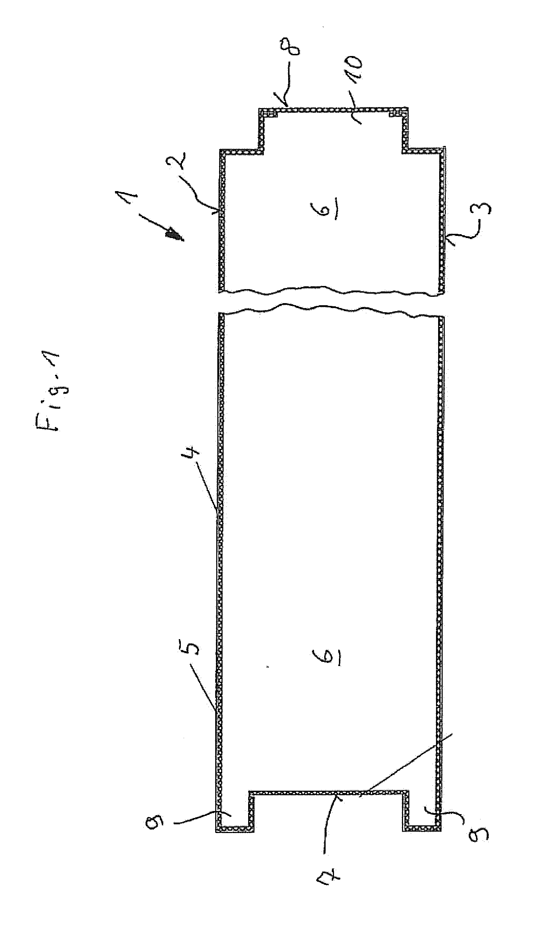

Das in Fig. 1 dargestellte Brandschutzpaneel 1 weist zwei Flachseiten 3 und 4 auf, welche Außenseiten der späteren Brandschutzwand bilden. Im Bereich der Flachseiten wird das Brandschutzpaneel 1 durch metallische Blechschichten in Form von Stahlblechen 4 nach außen hin abgeschlossen. An den Innenseiten der Stahlbleche 4 ist ein aus synthetischen Fasern gebildetes Vlies 5 angeordnet, welches einseitig mit synthetischem Kautschuk beschichtet ist, d. h. selbstklebend ausgestattet ist. Mit dieser beschichteten Seite ist das Vlies 5 am Stahlblech 4 befestigt.

Zwischen den Vliesen 5 ist auf den von den Stahlblechen 4 abgewandten Seiten ein PIR-Schaum 6 vorgesehen. Der PIR-Schaum 6 ist über die beidseitig angeordneten Vliese 5 mit den Stahlblechen 4 verbunden. Der PIR-Schaum 6 durchdringt die Vliese 5 zumindest teilweise und stellt somit eine innige Verbindung mit diesen und den damit durch Kleben verbundenen Stahlblechen 4 her.

In der dargestellten Ausführungsform sind folgende Stoffe verbaut: Bandbeschichtetes Stahlblech 4 der Qualität S280 mit einer Zinkauflage von 275 g / m² mit einer Dicke von 0,6 mm. Die Effektseite ist mit einem Polyesterlack in 25 µm Stärke beschichtet. Die Rückseite besitzt einen Schutzlack. Alternativ kann hier auch Baustahl der Qualität DX oder eine andere geeignete Stahlqualität Verwendung finden, die Stahlblechdicke beträgt vorteilhaft zwischen 0,3 und 1,2 mm. Anstelle eines beschichteten Stahlblechs kann auch ein Edelstahlblech eingesetzt werden, welches grundsätzlich keiner weiteren Beschichtung bedarf.

Die Zwischenschicht 5 ist ein aus Carbonfasern durch Vernadeln gebildetes Vlies. Die hierzu verwendeten Fasern sind schwer entflammbar.

Das Vlies 5 hat eine Dicke von 2 bis 2,5 mm und ein Gewicht von 200 g/m² ±10 % und ist durch Vernadeln gebunden. Die Fliesdicke kann vorteilhaft zwischen 1 - 3 mm betragen bei einem Gewicht von 80 bis 300 g/m². Anstelle des aus Carbonfasern gebildeten Vlies können auch aus Polyesterfasern, Glasfasern oder anderen nicht brennbaren synthetischen Fasern gebildete Vliese Verwendung finden.

Bei dem PIR-Schaum handelt es sich um ein pentangetriebenes Mehrkomponentensystem mit einem Polyoleintrag von 1,1 kg, einem Isocycnateintrag von 2,5 kg, Aktivatoren und Zusatzmitteln mit einem Eintrag von 0,1 kg und einem Pentananteil von 0,15 kg. Der Isocyanatindex beträgt 240. Der so erhaltene PIR-Schaum weist in der dargestellten Ausführungsform ein Raumgewicht von 38,5 kg/m³ und eine Dicke von 100 mm auf.

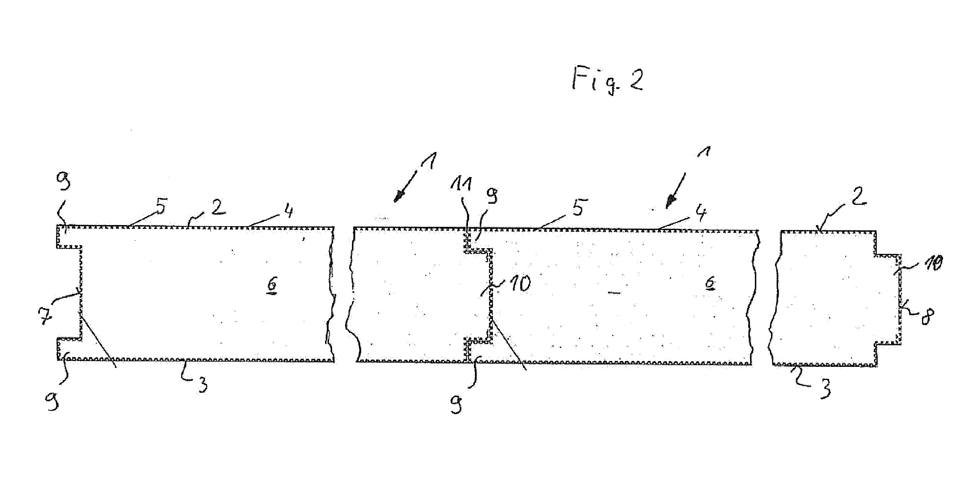

Das Brandschutzpaneel 1 ist an seinen seitlichen, in Einbaulage senkrechten Anschlussseiten 7 und 8 mit einem Eingriffsprofil versehen, d. h. die Anschlussseiten 7 und 8 sind so profiliert, dass sich beim Aneinanderfügen zweier Brandschutzpaneele 2, wie dies anhand von Fig. 2 dargestellt ist, ein Formschluss zwischen diesen in Querrichtung zur Wand, also normal zu den Flachseiten 2 und 3 einstellt. Das Brandschutzpaneel 1 kann auch in um 90° gedrehter Richtung verbaut werden, dann sind die Anschlussseiten 7 und 8 oben bzw. unten angeordnet und die Paneele übereinander.

Hierzu weist das Brandschutzpaneel an seiner Anschlussseite 7 ein Eingriffsprofil mit einem U-förmigen Querschnitt auf, dessen freie Schenkelenden 9 in Einbaulage zum benachbarten Paneel 1 gerichtet sind. Das an der Anschlussseite 8 entsprechend zum U-Profil ausgebildete Eingriffsprofil weist einen zentralen Schenkel 10 auf, der entgegengerichtet zu den Schenkelenden 9 gerichtet ist und hinsichtlich seiner Breite so dimensioniert ist, dass er gerade zwischen die Schenkel 9 des U-Profils einschiebbar ist.

Während die Vliese 5 so angeordnet sind, dass sie den PIR-Schaum 6 an den Flachseiten 2 und 3 und den Anschlussseiten 7 und 8 vollständig umgreifen, sind die Stahlbleche 4 im Bereich der Eingriffsprofile gefalzt ausgebildet, d. h. sie sind jeweils von einer Flachseite 2, 3 um 90° nach innen und dann nochmals um 90° nach innen bzw. nach außen abgebogen, sodass sie die freien Schenkelenden 9 des U-Profils übergreifen. Auf der anderen Anschlussseite 8 sind die Stahlbleche 4 bis zum Ende des zentralen Schenkels 10 geführt. Diese Anordnung stellt sicher, dass auch im Brandfall bei Verzug der Brandschutzpaneele 1 und einem sich teilweisen Öffnen der zwischen den Eingriffsprofilen gebildeten Trennfuge 11 stets sichergestellt ist, dass das Vlies 5 und PIR-Schaum 6 vom Blech 4 abgedeckt sind und nicht unmittelbar der Flammfront ausgesetzt sind.

Das dargestellte Brandschutzpaneel 1 kann kostengünstig auf einer kontinuierlich arbeitenden Anlage hergestellt werden, auf der zunächst zwei Blechbänder typischerweise oben und unten parallel geführt und an ihren zueinanderweisenden Innenseiten mit dem selbstklebenden Vlies 5 verbunden werden. Sodann wird nachdem die Bänder abstandsmäßig kalibriert sind, der PIR-Schaum eingebracht, wobei die seitliche Formgebung der Eingriffsprofile über entsprechende Profilierungswalzen erfolgt. Die Bleche werden kontinuierlich zu den späteren Eingriffsprofilen gefalzt, d. h. umgebogen. Schließlich werden Abschnitte des Bandes quer zur Laufrichtung abgetrennt, die jeweils ein Brandschutzpaneel 1 bilden. Die Trennseiten, welche in Einbaulage die Ober-und Unterseite eines Brandschutzpaneels 1 bilden, sind zunächst offen, d. h. dort liegt der PIR-Schaum frei zugänglich zwischen den Enden der Vliese 5 bzw. der diese überdeckenden Bleche. Typischerweise erfolgt in diesem Bereich eine Einfassung einer die Paneele 1 übergreifende feuerfeste Konstruktion an Decke und Boden, alternativ können hier auch gesondert geformte Blechabschnitte auf dem Vlies 5 aufgebracht werden.

Das vorstehend beschriebene Brandschutzpaneel 1 ist mit PIR-Schaum 6 versehen. Es versteht sich, dass statt des PIR-Schaumes auch ein PUR-Schaum Verwendung finden kann, und zwar gemäß den weiter oben angegebenen Spezifikationen.

Das vorstehend beschriebene Brandschutzpaneel 1 kann zwar besonders vorteilhaft auf einer kontinuierlich arbeitenden Anlage hergestellt werden. Es kann jedoch auch diskontinuierlich, d. h. in Formen hergestellt werden, wenn dies aus welchen Gründen auch immer zweckmäßiger, sein sollte.

### Bezugszeichenliste

- 1 -: Brandschutzpaneel
- 2 -: Flachseite
- 3 -: Flachseite
- 4 -: Stahlbleche
- 5 -: Vliese
- 6 -: PIR-Schaum
- 7 -: Anschlussseite links
- 8 -: Anschlussseite rechts
- 9 -: freie Schenkelenden vom U-Profil
- 10 -: zentraler Schenkel
- 11 -: Trennfuge

## Patentansprüche

1. Brandschutzpaneel für eine Brandschutzwand mit zwei metallischen Blechschichten (4) und einer dazwischen befindlichen PIR-oder PUR-Schaumschicht (6), wobei zwischen der Schaumschicht (6) und Blech (4) mindestens eine Zwischenschicht (5) angeordnet ist.

2. Brandschutzpaneel nach Anspruch 1, bei dem zwischen der Schaumschicht (6) und dem Blech (4) eine Zwischenschicht (5) als Haftvermittlerschicht angeordnet ist.

3. Brandschutzpaneel nach Anspruch 1 oder 2, bei dem die Zwischenschicht (5) durch eine auf die metallische Blechschicht geklebte Textilie gebildet ist.

4. Brandschutzpaneel nach einem der vorhergehenden Ansprüche, bei dem die Textilie aus Carbonfasern aufgebaut ist.

5. Brandschutzpaneel nach einem der vorhergehenden Ansprüche, bei dem die Textilie aus Glasfasern aufgebaut ist.

6. Brandschutzpaneel nach einem der vorhergehenden Ansprüche, bei dem die Textilie aus Polyesterfasern aufgebaut ist.

7. Brandschutzpaneel nach einem der vorhergehenden Ansprüche, bei dem die Textile mit Klebstofffasern, insbesondere Schmelzklebstofffasern durchsetzt ist.

8. Brandschutzpaneel nach einem der vorhergehenden Ansprüche, bei dem die Textilie als Vlies (5) ausgebildet ist, vorzugsweise als ein durch Vernadeln gebildetes Vlies (5).

9. Brandschutzpaneel nach einem der vorhergehenden Ansprüche, bei dem an zwei voneinander abgewandten seitlichen Anschlussseiten (7, 8) Eingriffprofile ausgebildet sind, derart, dass benachbarte Brandschutzpaneele (1) einer Brandschutzwand in Querrichtung zur Wand formschlüssig miteinander verbunden sind

10. Brandschutzpaneel nach einem der vorhergehenden Ansprüche, bei dem die metallischen Bleche und die Zwischenschichten auch zumindest Teilbereich der seitlichen Anschlussseite (7, 8) angeordnet sind.

11. Brandschutzpaneel nach Anspruch 10, **dadurch gekennzeichnet, dass** ein Eingriffprofil einen U-förmigen Querschnitt aufweist, wobei die freien Schenkelenden (9) zum benachbarten Paneel (1) gerichtet sind.

12. Brandschutzpaneel nach Anspruch 10 oder 11, **dadurch gekennzeichnet, dass** ein Eingriffprofil einen in das Eingriffsprofil des benachbarten Paneels (1) eingreifenden Schenkel (10) aufweist.

13. Brandschutzpaneel nach einem der vorhergehenden Ansprüche, bei dem die metallischen Bleche (4) durch Stahlbleche (4) gebildet sind.

14. Brandschutzpaneel nach einem der vorhergehenden Ansprüche, bei dem die metallische Bleche im Bereich der seitlichen Anschlussseiten (7, 8) durch Falzen der Bleche gebildet sind.

15. Brandschutzpaneel nach einem der vorhergehenden Ansprüche, bei dem das Paneel (1) in einem kontinuierlichen Verfahren hergestellt und durch Abtrennen aus einem Band gebildet ist.
